(19) Europäisches Patentamt
European Patent Office
Office européen des brevets

(11) **EP 1 747 703 B1**

(12) **EUROPEAN PATENT SPECIFICATION**

(45) Date of publication and mention
of the grant of the patent:
**01.07.2009 Bulletin 2009/27**

(51) Int Cl.:
***H05B 41/392*** (2006.01)

(21) Application number: **05731738.0**

(22) Date of filing: **29.04.2005**

(86) International application number:
**PCT/IB2005/051405**

(87) International publication number:
**WO 2005/109968 (17.11.2005 Gazette 2005/46)**

(54) **METHOD AND CIRCUIT ARRANGEMENT FOR THE OPERATION OF A DISCHARGE LAMP**

VERFAHREN UND SCHALTUNGSANORDNUNG ZUM BETRIEB EINER ENTLADUNGSLAMPE

PROCEDE ET CIRCUIT POUR LE FONCTIONNEMENT D'UNE LAMPE A DECHARGE

(84) Designated Contracting States:
**AT BE BG CH CY CZ DE DK EE ES FI FR GB GR HU IE IS IT LI LT LU MC NL PL PT RO SE SI SK TR**

(30) Priority: **10.05.2004 EP 04102016**

(43) Date of publication of application:
**31.01.2007 Bulletin 2007/05**

(73) Proprietors:
• **Philips Intellectual Property & Standards GmbH**
**20099 Hamburg (DE)**
Designated Contracting States:
**DE**
• **Koninklijke Philips Electronics N.V.**
**5621 BA Eindhoven (NL)**
Designated Contracting States:
**AT BE BG CH CY CZ DK EE ES FI FR GB GR HU IE IS IT LI LT LU MC**

(72) Inventors:
• **Weichmann, Ulrich**
**52066 Aachen (DE)**
• **Pekarski, Pavel**
**52066 Aachen (DE)**
• **Derra, Günther Hans**
**52066 Aachen (DE)**

(74) Representative: **Volmer, Georg**
**Philips Intellectual Property & Standards GmbH**
**Postfach 50 04 42**
**52088 Aachen (DE)**

(56) References cited:
**GB-A- 1 575 834        US-A- 4 137 484**
**US-B1- 6 215 252       US-B1- 6 441 564**
**US-B1- 6 489 731**

• **KAISER W ET AL: "Current pulse fed high-pressure-sodium lamps" 13 October 2002 (2002-10-13), CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, PAGE(S) 14 , XP010610076 ISBN: 0-7803-7420-7 the whole document**

**Description**

The invention relates to a method and a circuit arrangement for the operation of a discharge lamp. The method and the circuit arrangement are in particular designed for high-pressure gas mercury discharge lamps (HID [high intensity discharge] lamps or UHP [ultra high performance] lamps). The invention further relates to a lighting unit with a discharge lamp and a circuit arrangement of this type (for instance for fiber optics or for use as an endoscopic light source) and to a projection system with a projection display and a lighting unit of this type.

The radiation spectrum of discharge lamps with mercury in the gas filling is, in particular in the so-called UHP lamps, characterized by mercury lines and a relatively weak red range of the continuous spectrum. A known UHP lamp with 120 Watts, for instance, has an Ra8 color rendering index (CRI) of approximately 65 points, while a UHP lamp of higher power reaches a value of approximately 70 points.

It is possible to increase the color rendering index to some degree by increasing the mercury vapor pressure in the lamp. However, quite apart from the fact that this measure can involve technical difficulties, an optimum or sufficiently high color rendering index for every application cannot be achieved thereby. This applies in particular to applications in medical endoscopy. Other applications, such as projection displays, also benefit from improved color rendering, since this directly affects the efficiency of the projection display.

US 6,441,564 describes a high-pressure gas discharge lamp wherein the color temperature and the color rendering index of the emitted light are to be held as constant as possible in dimmed operation. For this purpose, various measures are proposed, such as optimizing the mixing ratio of cesium and mercury in the discharge gas or increasing the degree of ionization, in particular of cesium. This is said to be achieved by superimposing current pulses of varying level, duration and number on the low-frequency lamp current to generate high electrical field strengths. These measures can, however, not be used in discharge lamps without cesium in the discharge gas.

US-PS 6,489,731 discloses a power supply and/or ballast system for optimizing performance of an electrical load such as a high intensity discharge lamp by monitoring the current and voltage signal driving the load, and calculating a representative portion of the power spectrum being delivered to the load.

US-PS 6,215,252 discloses a method for operating a lamp having a pair of electrodes and an arc gap therebetween, providing a power supply for applying a voltage and current to the lamp and providing a controller for sensing lamp parameters and configured to control a signal to be applied by the power supply to the lamp.

GB 1 575 834 and US-PS 4,137,484 disclose high pressure sodium vapor lamps and methods for operating the same by means of current pulses with certain amplitudes, durations and repetition rates such that improvements of the color properties of the generated light are achieved.

It is a general object of the invention to search for a way of increasing the color rendering index of a discharge lamp and in particular of a mercury discharge lamp to a greater degree.

It is a particular object of the invention to create a method and a circuit arrangement where discharge lamps and in particular mercury UHP lamps can be so operated that the emitted light has a significantly higher color rendering index than that which would be achievable by increasing the mercury vapor pressure.

As claimed in claim 1, this object is achieved by a method for the operation of a discharge lamp, with at least one first mode in which the lamp is essentially operated at its rated power, and wherein at least one of the color rendering index and the pattern of the spectrum of the emitted light is adjusted by varying at least one of the amplitude $I_p$, the duration $\tau_p$ and the repetition rate f of current pulses superimposed on the lamp current, wherein a third mode for a conditioning or regeneration of the lamp is provided, which is activated for a predetermined duration or for predetermined time intervals or when a high color rendering index is not required, and in which third mode at least one of the amplitude of the lamp current and the amplitude $I_p$ and the repetition rate f of the current pulses superimposed on the lamp current is so far reduced in comparison to the first mode that any deposit on the inner walls of the lamp bulb is reduced or removed.

The object is further achieved by a circuit arrangement as claimed in claim 15.

The lamp is in particular a mercury gas discharge lamp, preferably having a mercury vapor pressure of at least 100 bar.

Particular advantages of these objects lie in the fact that significantly wider spectral lines can be obtained and that the continuous part of the spectrum, in particular in the red range, can be raised. All this can be achieved without any modification of the lamp geometry or of the composition or pressure of the gas in the lamp and without increasing the power of the lamp. This applies in particular to lamps with pure mercury discharge and a relatively high mercury vapor pressure in the discharge gas. It has been shown that the color rendering index can be improved by about 15 points by means of the solution according to the invention. This not only results in the improved efficiency of projection systems, but also opens up new applications, for instance in medical endoscopy.

The superimposition of a current pulse of the same polarity as the relevant half cycle on a square-wave alternating lamp current at the end of each half cycle prior to polarity change in order to increase the stability of the arc discharge and to avoid arcing is known. Depending on the design and power of the lamp, the amplitude of such a current pulse may, for instance, be approximately 3 A, the total pulse power lying in the range between approximately 5 and 15% of the total lamp power. It has, however, been found that the color rendering index cannot be significantly influenced by these measures.

Useful further features of the invention are the subject matter of the dependent claims.

The subject matter of claims 2 to 4 relate to advantageous embodiments of the third mode when e.g. the electrode gap has changed so much that the operating voltage comes to lie outside a preset range.

With the embodiment according to claim 6, the color rendering index can be increased further by means of a second mode.

With a lamp current according to claims 7 and 8, a particularly stable arc discharge can be achieved.

The subject matter of claims 5 and 9 to 12 is preferred values or ranges of various parameters which can be selected in dependence on the design and power of the lamp, on the intended application and the color rendering index requirements and on the pattern of the spectrum.

The subject matter of claim 13 is a preferred implementation of the second mode according to claim 6, while claim 14 describes a further measure for the optimization of a desired pattern of the radiation spectrum.

These and other aspects of the invention are apparent from and will be elucidated with reference to the embodiments described hereinafter.

In the drawings:

Fig. 1 shows the pattern of an alternating lamp current for the operation of a UHP lamp;
Fig. 2 shows time-resolved wave length spectra of the light of a UHP lamp of this type with and without current pulses;
Fig. 3 shows a number of wave length spectra for different current pulses;
Fig. 4 shows time-averaged wave length spectra with and without current pulses for comparison;
Fig. 5 shows a number of patterns of the color rendering index for different lamps as a function of the kind of current pulses;
Fig. 6 shows patterns of lamp efficiency as a function of the level of the current pulses;
Fig. 7 shows patterns of the color efficiency and of the color rendering index as a function of the level of the current pulses;
Fig. 8 shows a pattern of the lamp current during a first mode;
Fig. 9 shows a time-averaged wave length spectrum of the emitted light obtained with the lamp current according to Figure 8;
Fig. 10 shows a pattern of the lamp current during a third mode;
Fig. 11 shows a time-averaged wave length spectrum of the emitted light obtained with the lamp current according to Figure 10; and
Fig. 12 shows a circuit arrangement for generating an alternating lamp current.

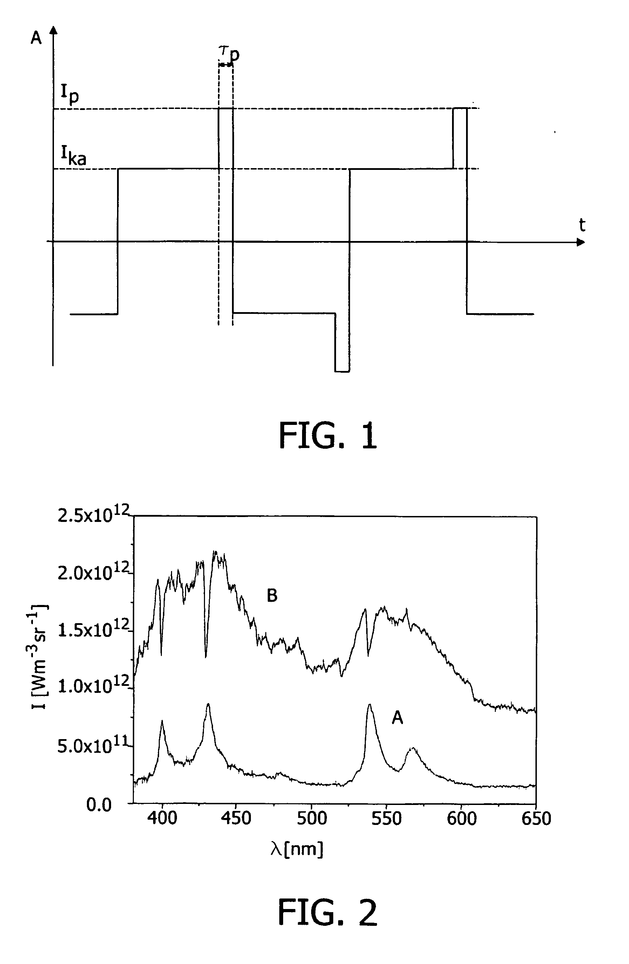

The spectral characteristic of a known UHP lamp is essentially determined by the relatively high mercury vapor pressure in the lamp bulb, which results in three distinct mercury lines and an essentially continuous portion of the spectrum. Such a time-resolved spectrum is shown in Figure 2 graph A, where the wave length $\lambda$ [nm] is plotted on the horizontal axis and the light intensity $I$ [$Wm^{-3}sr^{-1}$] is plotted on the vertical axis.

To improve the Ra8 color rendering index of the light emitted by a UHP lamp of this type, current pulses are, according to Figure 1, superimposed on the generally square-wave alternating lamp current, which has a lamp current amplitude of $I_{ka}$. These current pulses have the same polarity as the lamp current cycle on which they are superimposed. To increase the stability of arc discharge and to avoid arcing, the polarity of the lamp current preferably changes immediately after the current pulses. The lamp current can, however, alternatively feature a higher or lower number of polarity changes than the number of current pulses in the same unit of time.

In addition, the Ra8 color rendering index can be improved by the superimposition of the current pulses according to the invention even if the lamp current is not a square-wave alternating current (for instance sinusoidal) or a direct current.

Depending on the design and power of the lamp, the current pulses have an amplitude $I_p$ between approximately 5 and 50 A at a lamp current amplitude $I_{ka}$ between approximately 0.3 and 5 A. The duration $\tau_p$ of the current pulses lies between approximately 10 and 500 $\mu$s, their repetition rate f between approximately 50 Hz and 10 kHz.

The spectrum of the generated light obtained during such a current pulse is shown in Figure 2 graph B. This graph clearly shows the reversal of the spectral lines generated by the mercury at approximately 404 nm, 435 nm and 546 nm. In addition, the continuous portion of the spectrum is substantially more intensive and also wider.

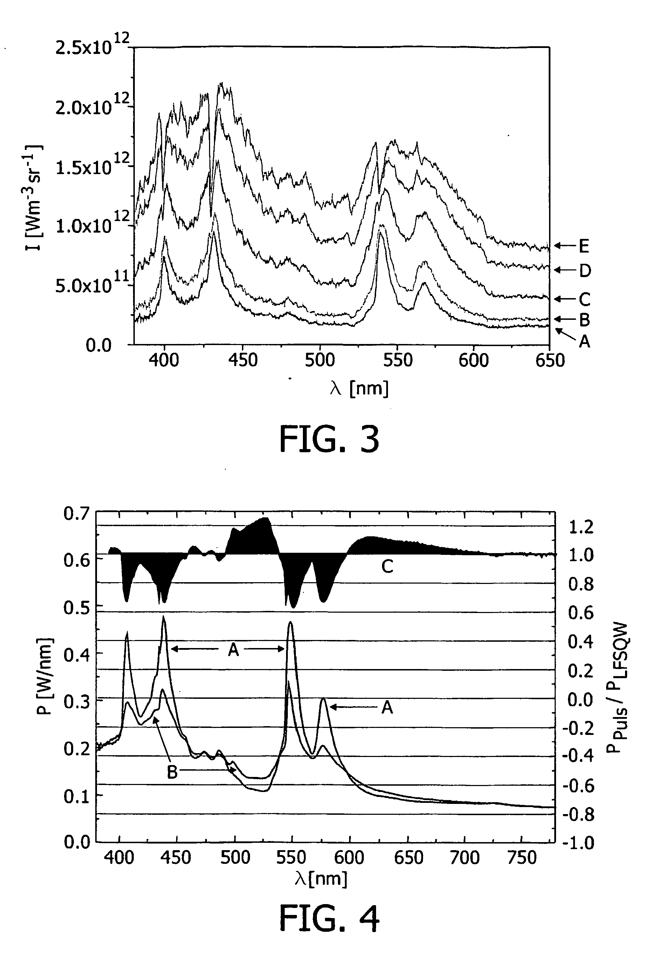

Figure 3 shows various spectral patterns of the light emitted by the UHP lamp referred to above during different current pulse amplitudes in comparison to the pattern of the spectrum without or outside of the current pulses (graph A), where the wave length $\lambda$ [nm] is once again plotted on the horizontal axis and the light intensity $I$ [$Wm^{-3}sr^{-1}$] is plotted on the vertical axis. Graph B shows the pattern of the spectrum at a current pulse amplitude of 2.5 A, graph C at an amplitude of 5 A, graph D at an amplitude of 7.5 A and graph E the pattern at a current pulse amplitude of 10 A.

The patterns of these graphs clearly illustrate that the reversal of the mercury lines increases with the amplitude of the current pulses and that the continuous portion of the spectrum is generally raised,

It has been found that this is essentially due to the fact the conducting plasma channel is heated so intensively by the high current pulses that the absorption processes, owing to the high plasma temperature, result in an increased overall emission, a widening of the mercury lines at 577 and 579 nm and a reversal of the mercury lines at 404, 435 and 546 nm.

These changes of the spectral patterns correspond to an improvement of the Ra8 color rendering index during the duration of the current pulses. A first opportunity to make use of this light involves the operation of the UHP lamp together with a time filter, for instance in the form of a chopper wheel or an electrooptical modulator etc.

By suitable matching of the time filter to the frequency of the current pulses, in the case of the chopper wheel by suitable adjustment of its rotary speed, the light generated during the current pulses can be let through and made available for an application, while the light emitted outside the current pulse phases is blocked. Even if, as in any spectral filtering process, the efficiency of the lamp is reduced by this, this first measure can be expedient, in particular in applications demanding a timed resolution of the display, as in the case of stroboscopic lighting (for instance in DLP projection displays).

Without the use of a time filter, the spectrum of the total light emitted by the lamp is the time average between the spectrum during the duration of the current pulses and the spectrum during the remaining time in which these current pulses are not applied. Depending on the duration $\tau_p$ of the current pulses, their amplitude $I_p$ and their repetition rate f, the resulting spectrum of the total emitted light lies between graph A and one of the other graphs B to E in Figure 3 (or possibly even above).

As a second measure, light with an improved color rendering index can be generated by relating the periods of time during and outside the current pulses to one another, i.e. by so selecting the duration $\tau_p$, the repetition rate f and the amplitude $I_p$ of the current pulses that the overall result is an average spectrum with a desired color rendering index.

A third measure, which may be combined with the second measure, involves the matching of the spectrum of the light emitted by the lamp to a desired pattern by using known spectral filters, such as interference filters, thus largely attenuating distinct spikes.

The duration $\tau_p$ of the current pulses is preferably as long as possible, the upper limit of this duration $\tau_p$ being determined by stability and by an excessive burning back of the lamp electrodes. A preferred value for the maximum duration $\tau_p$ of the current pulses is approximately 0.5 ms.

The minimum duration $\tau_p$ of the current pulses is determined in accordance with the reaction time of the plasma and is preferably approximately 10 µs.

Similar rules apply to the maximum amplitude $I_p$ of the current pulses, because the thermal loading of the electrodes, which should generally be kept as low as possible, increases with the amplitude. A preferred value for the maximum current amplitude $I_p$ is approximately 10 A, but in certain cases up to approximately 50 A can be used.

The lowest value for the current amplitude $I_p$ is preferably approximately 5 A, because at or from this value, the reversal of the mercury spectral lines becomes , as indicated in Figure 3.

The repetition rate f of the current pulses is preferably chosen to be higher than the frequency of the alternating lamp current, which generally lies between approximately 60 and 180 Hz, typically in the range about 90 Hz. The higher the repetition rate f of the current pulses, the shorter can be their duration $\tau_p$ at equal pulse duty factor (2 f $\tau_p$ / T). The pulse duty factor of the current pulses preferably lies between approximately 5 and 50%. A repetition rate f of the current pulses between approximately 50 Hz and 10 kHz has been found to be particularly expedient.

It has further been found that a ratio between the power $P_p$ during the current pulses and the total lamp power $P_{La}$ of approximately 0.4 to 0.95 is particularly useful with regard to the increase of the Ra8 color rendering index.

This ratio between the power $P_p$ during the current pulses and the total lamp power $P_{la}$ is determined by the following equation:

$$P_p / P_{la} = \{2 \, f \, \tau_P \, I_P\} / \{2 \, f \, \tau_P \, I_P + (1 - 2 \, f \, \tau_P) \, I_{ka}\} = 2 \, f \, \tau_P \, I_P / I_{ka,}$$

where $\tau_p$ designates the pulse duration, $I_p$ the current pulse amplitude, $I_{ka}$ the lamp current amplitude and f the repetition rate.

The average lamp current $I_{avg}$ is determined by:

$$I_{avg} = (1 - 2 \, f \, \tau_P) \, I_{ka} + 2 \, f \, \tau_P \, I_P.$$

Graph A in Figure 4 shows the pattern of the radiation power P[W/nm] of the emitted light over the wave length $\lambda$ [nm] for a UHP lamp with 120 Watts and a frequency of 400 Hz ($I_p = I_{ka}$) of the square-wave alternating lamp current (standard block current LFSQW). The scale of values is plotted on the left-hand ordinate.

In comparison, graph B in Figure 4 shows the time-averaged pattern of the radiation power P [W/nm] resulting from the superimposition of current pulses with an amplitude $I_p$ of approximately 8 A and a pulse duty factor of approximately 20% (i.e. a pulse duration $\tau_p$ of 0.5 ms) on the alternating lamp current.

Graph C in Figure 4 finally illustrates the relationship between the spectral radiation powers $P_{Puls}/P_{LFSQW}$ recorded with and without current pulses, where the scale of values is plotted on the right-hand ordinate. The portions of the graph above the value 1 denote portions of the wave length spectrum for which the Ra8 color rendering index has been increased as a result of the current pulses.

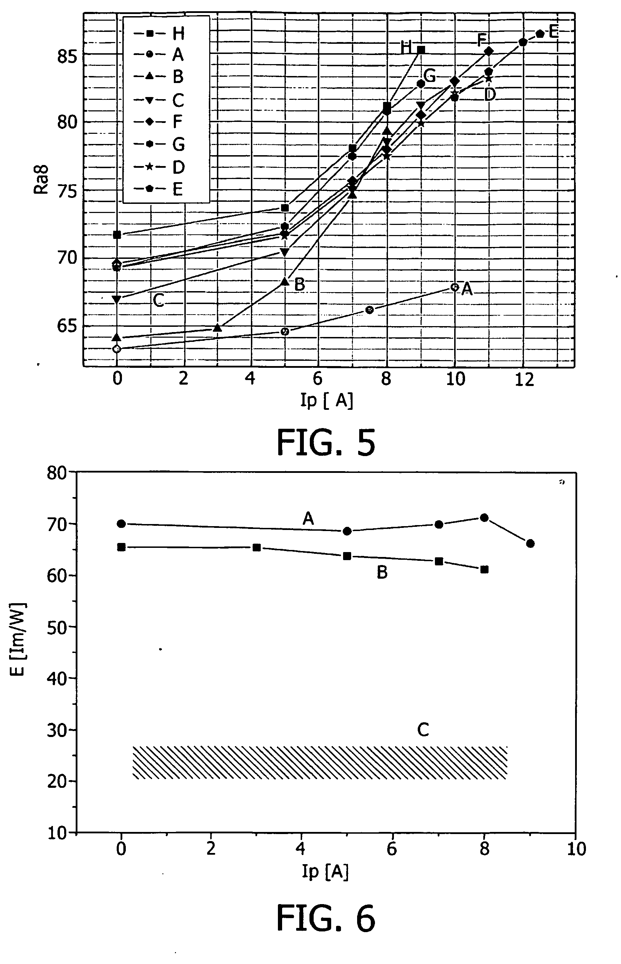

Figure 5 shows the pattern of the Ra8 color rendering index as a function of the amplitude $I_p$ [A] for the following lamp power values, lamp current frequencies and pulse duty factors (proportion of the duration of the current pulse in percent of the whole cycle):

Graph A: 120 W, 100 Hz, 5%;
Graph B: 120 W, 400 Hz, 20%;
Graph C: 200 W, 400 Hz, 20%;
Graph D: 220 W, 400 Hz, 20%;
Graph E: 250 W, 800 Hz, 20%;
Graph F: 220 W, 800 Hz, 20%;
Graph G: 220 W, 400 Hz, 25%;
Graph H: 250 W, 1000 Hz, 25%.

For the above UHP lamp with 120 W, a lamp current frequency of 400 Hz and a pulse duty factor of the current pulse of 20%, graph B in Figure 5 indicates an increase in the Ra8 color rendering index from 64 to 79 points at a current pulse amplitude of 8 A (compared to 0 A).

The position of the graphs further shows that the Ra8 color rendering index increases at nearly every current pulse amplitude with the pulse duty factor.

In addition, the graphs in Figure 5 show that the Ra8 color rendering index can be increased from approximately 70 without current pulses to values in the range of 85 with short and strong current pulses in lamps with higher output in the range between 200 W and 250 W.

Graph A in Figure 6 shows the efficiency E [lm/W] of a UHP lamp with 250 W, a lamp current frequency of 1000 Hz and a pulse duty factor of the current pulses of 25%, while graph B shows the efficiency E of a UHP lamp with 120 W, a lamp current frequency of 400 Hz and a pulse duty factor of the current pulses of 20%, with the amplitude $I_p$ [A] of the current pulses being again plotted on the horizontal axis. In comparison, the hatched area C shows the typical efficiency of a xenon lamp.

On the one hand, this clearly illustrates that the efficiency of UHP lamps in the pulsed mode is only very slightly lower than without current pulses. This slightly reduced efficiency is compensated by the benefits derived with regard to the Ra8 color rendering index. On the other hand, Figure 6 shows that the lower efficiency (greater than 60 lm/W) of the UHP lamps exceeds the typical efficiency of known xenon lamps as generally used in endoscopy and fiber optics by a factor of at least 2.

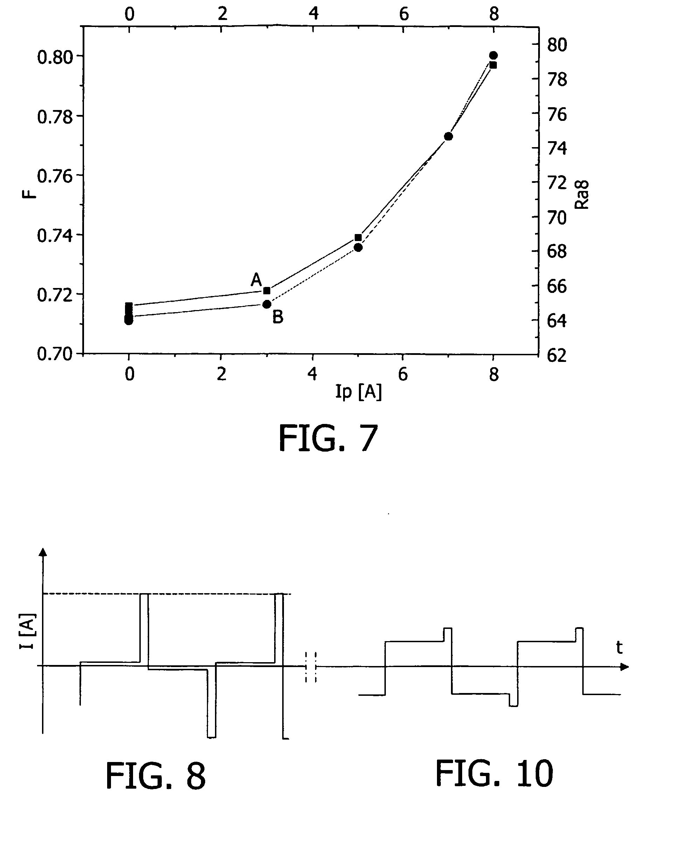

For a UHP lamp with a power of 120 Watts, a lamp current frequency of 400 Hz and a pulse duty factor of the current pulses $I_p$ of 20%, graph A in Figure 7 shows the pattern of color efficiency F on the basis of PTV filters as a function of the amplitude $I_p$ [A] of the current pulses. Graph A in particular indicates that a color efficiency of almost 80% is reached at a current pulse amplitude of 8 A, which corresponds to an increase in light intensity of more than 10% compared to operation without current pulses. Figure 6 (graph B) once again plots the pattern of the Ra8 color rendering index for the lamp referred to above.

In addition to the first and second modes for the improvement of the color rendering index of emitted light as described above, a third mode designed for the conditioning or regeneration of the lamp, during which at least one of the operating parameters, such as the amplitude and / or the frequency of the lamp current and / or the amplitude and / or the repetition rate and / or the duration of the current pulses superimposed on the lamp current are / is so adjusted that, for instance, the efficiency or the burning voltage of the lamp remains in a preset range, can be activated, preferably in predetermined time intervals or, if required, for a predetermined duration. These parameters should be selected or optimized in dependence on the design of the lamp and on the operating parameters of the first mode.

For the fact is it has been found in individual cases that a deposit (essentially tungsten) initially resulting in a blackening of the lamp bulb can form on the inner walls of the lamp bulb, particularly if the amplitude of the current pulses is relatively high. The main reason for this is the relatively high evaporation rate of tungsten during the high-current phases, possibly reinforced by an increase in ion current and sputter rate at the beginning of these high-current phases. The high thermal loading of the lamp bulb can then result in a re-crystallization of the quartz contained in the lamp bulb, leading to a white opacity of the lamp bulb and thus to light losses and a reduction of the efficiency of the lamp.

The reduction of the amplitude and frequency of the lamp current in the third mode (and thus of the repetition rate of the current pulses) relative to the first mode has been found particularly effective when removing the tungsten deposits.

By way of example, Figure 8 shows a pattern of the lamp current in the first mode, on which current pulses with a relatively high pulse amplitude compared to the lamp current amplitude are superimposed.

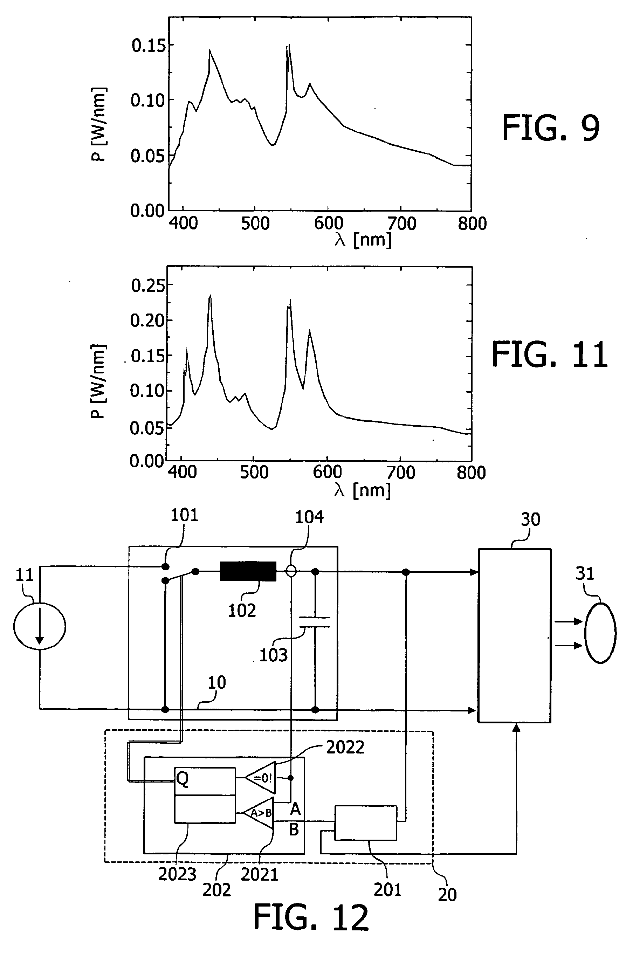

Figure 9 shows the time-averaged pattern of the radiation power P[W/nm] over the wave length λ [nm], which is generated for a UHP lamp with a rating of 120 Watts if the current pulses have an amplitude $I_p$ of approximately 11.5 A and a pulse duty factor of approximately 15%, the repetition rate of the current pulses being approximately 800 Hz. The resulting Ra8 color rendering index has a value of approximately 92.

For the removal of any tungsten deposits, Figure 10 shows an example for a pattern of a lamp current during the third mode, which has a significantly lower frequency than in the first mode and where the amplitude of the superimposed current pulses is significantly lower than that of the lamp current.

Figure 11 shows the corresponding pattern of the radiation power P[W/nm] over the wave length λ [nm] for the same lamp and a frequency of the square-wave alternating lamp current (standard block current LFSQW) of 400 Hz. The resulting Ra8 color rendering index has a value of approximately 70.

The third mode is preferably activated when there is no need for the high color rendering index (or the value is sufficient according to Figure 11) or when the equipment activating the first mode is in a standby mode.

Further conditioning or regeneration may involve the correction of any reduction or increase in burning voltage caused by the growth or burning-back of electrodes by suitable selection of the above parameters in the third mode.

In particular, the above numerical example for the third mode (low current amplitudes and frequencies) can result in an increase of the thickness or diameter of the electrode tips due to material accumulation. Owing to the resulting increased heat transfer along the electrode, the front surface of the electrode tip reaches its melting temperature only at a greater electrode tip length, resulting in its increased growth and in the reduction of the burning voltage of the lamp. The opposite effect (relatively thin and short electrode tips and thus limited electrode growth and a reduction of burning voltage or even a burning-back of the electrodes) is achieved by choosing a suitably high lamp current frequency.

Figure 12 finally is a block diagram of an embodiment of a circuit arrangement for the supply of a discharge lamp 31 with the alternating lamp currents described above. The circuit arrangement comprises a known converter 10 (Buck converter) for the generation of a direct current with a defined pattern from the supply voltage supplied by a direct voltage source 11. A collector 30 converts the direct current into the alternating lamp current, where the collector 30 in addition incorporates a controllable generator for the generation of a desired frequency of the alternating lamp current and possibly of an ignition voltage for the discharge lamp 31.

There is also a control unit 20 which so controls the converter 10 that the pulses described above are applied to the direct current. The control unit 20 further so drives the collector 30 that the alternating lamp current has a presettable frequency.

In detail, the converter 10 includes a series-connected inductor 102, one terminal of which can be connected to a pole of the direct voltage source 11 via a change-over switch 101 (generally implemented in the form of a transistor and a diode) in a first switch position. In a second switch position of the change-over switch 101, the inductor 102 is connected in parallel to a capacitance 103 applied to its other terminal. In addition, a current measuring device 104 is provided to generate a current signal representing the level of the current flowing through the inductor 102.

The control unit 20 essentially comprises a microcontroller 201, a switching unit 202 and possibly a pulse generating stage (not illustrated) for the converter 10.

A voltage signal tapped off the output of the converter 10 is applied to one input of the microcontroller 201. At a first output, the microcontroller 201 generates a current reference signal (set value of the non-commuted lamp or pulse current), which is fed to the switching unit 202, and at a second output it generates a current direction and frequency control signal, which is applied to the collector 30 and effects the commutation of the direct current synchronous with the pulses and with a presettable frequency.

The switching unit 202 comprises a first logic gate 2021, to the first input of which the current signal of the current measuring device 104 is applied, while the reference signal generated by the microcontroller 201 is applied to its second input, and a second logic gate 2022, to which the current signal is likewise applied. The switching unit 202 further comprises a switching element 2023 with a set input connected to the output of the second logic gate 2022 and a reset input to which the output of the first logic gate 2021 is applied. An output Q of the switching element 2023 is finally connected to a switching terminal of the change-over switch 101 to switch it between its first and second switch positions.

The circuit arrangement essentially operates as described below, the processes involved in the ignition and starting of the lamp being known in prior art and therefore not having to be explained in detail.

At the beginning of a switching cycle of the converter 10, the change over switch 101 initially is in the first (upper) switch position, connecting the positive pole of the direct current source 11 to the inductor 102. As a result, the current flows through the inductor 102 and rises until its level as detected by means of the current signal exceeds the reference signal generated by the microcontroller 201 and applied to the second input of the first logic gate 2021.

When this happens, the first logic gate 2021 generates a signal at the reset input of the switching element 2023, which consequently switches the change-over switch 101 to the second (lower) switch position shown in Figure 12. This disconnects the inductor 102 from the direct current source 11 and simultaneously connects it in parallel with the capacitance 103, resulting in a decaying current flow in the circuit formed in this way.

When this current has reached a value of 0, the second logic gate 2022 generates a signal at the set input of the switching element 2023, which then returns the change-over switch 101 to the first switch position, starting the process once more.

The switching frequency of the change-over switch 101 is essentially determined by the dimensions of the inductor 102 and generally lies between approximately 20 kHz and several 100 kHz. The dimensions of the capacitance 103 keep the output voltage applied to the converter 10 substantially constant, so that the current flowing through the collector 30 and the lamp 31 is also substantially constant and ideally half the reference value preset by the microcontroller 201. On the other hand, at its first output the microcontroller 201 has to generate a current reference signal with a level which is twice that of the desired lamp current.

The parameters described above, in particular the frequency of the lamp current, the pulse duty factor of the current pulses and their amplitude, duration, phase and frequency (repetition rate) are stored in a memory of the microcontroller 201, enabling it to calculate the current reference signal (set value) for the switching unit 202 and the current direction and frequency control signal for the collector 30.

**Claims**

1. A method for the operation of a discharge lamp, with at least one first mode in which the lamp is essentially operated at its rated power, and wherein at least one of the color rendering index and the pattern of the spectrum of the emitted light is adjusted by varying at least one of the amplitude ($I_p$), the duration ($\tau_p$) and the repetition rate (f) of current pulses superimposed on the lamp current, the method being **characterized in**:

   a third mode for a conditioning or regeneration of the lamp, the third mode being activated for a predetermined duration or for predetermined time intervals or when a high color rendering index is not required, in which third mode

   at least one of the amplitude of the lamp current and the amplitude ($I_p$) and the repetition rate (f) of the current pulses superimposed on the lamp current is so far reduced in comparison to the first mode that any deposit on the inner walls of the lamp bulb is reduced or removed.

2. A method according to claim 1, wherein during the third mode at least one of the amplitude and the frequency of the lamp current and the amplitude ($I_p$), the duration ($\tau_p$) and the repetition rate (f) of the current pulses superimposed on the lamp current is varied for the conditioning or regeneration of the lamp.

3. A method as claimed in claim 1, wherein during the third mode at least one of the amplitude and the frequency of the lamp current and the amplitude ($I_p$), the duration ($\tau_p$) and the repetition rate (f) of the current pulses superimposed on the lamp current is adjusted such that the efficiency or the burning voltage of the lamp remains in a preset range.

4. A method as claimed in claim 1, wherein during the third mode the frequency of the lamp current is increased or reduced relative to the frequency prevailing during the first mode in order to increase or reduce the burning voltage of the lamp.

5. A method as claimed in claim 1, wherein at least one of the amplitude ($I_p$), the duration ($\tau_p$) and the repetition rate (f) of current pulses is so adjusted that a change of at least one of the color rendering index and the pattern of the spectrum is essentially effected by a variation of the temperature of the plasma channel and the absorption processes in the discharge gas of the lamp.

6. A method as claimed in claim 1, with a second mode wherein at least a portion of the light emitted by the lamp during the phases without current pulses is filtered out.

7. A method as claimed in claim 1, wherein the lamp current is a substantially square-wave alternating current.

8. A method as claimed in claim 7, wherein the current pulses have the same polarity as the half cycle on which they are superimposed, and wherein the lamp current changes polarity after a current pulse.

9. A method as claimed in claim 1, wherein the ratio between the power Pp during the current pulses and the total lamp power $P_{La}$ lies between approximately 0.4 and 0.95.

10. A method as claimed in claim 1, wherein the pulse duty factor ($2 f \tau_p / T$) of the current pulses lies between approximately 5 and 50%.

11. A method as claimed in claim 1, wherein the current pulses have an amplitude in a range between approximately 5 and 50 A at a lamp current amplitude in the range between approximately 0.3 and 1 A.

12. A method as claimed in claim 1, wherein the current pulses have a repetition rate f between approximately 50 Hz and 10 kHz.

13. A method as claimed in claim 6, wherein the filtering process is achieved by means of a time filter passing only the light emitted by the lamp during the current pulses.

14. A method as claimed in claim 1, wherein the light emitted by the lamp is filtered by a spectral filter to obtain a desired pattern of the radiation spectrum.

15. A circuit arrangement with a control unit (20) for the operation of a discharge lamp adapted to carry out the method as claimed in any of the claims 1 to 15.

16. A circuit arrangement as claimed in claim 15, in combination with a discharge lamp and a time and / or spectral filter for the light emitted by the lamp.

17. An optical fiber arrangement with a discharge lamp and a circuit arrangement as claimed in claim 15.

18. A lighting unit with a mercury high-pressure gas discharge lamp and a circuit arrangement as claimed in claim 15.

19. A projection system with a projection display and a lighting unit as claimed in claim 18.

20. An endoscope with a lighting unit as claimed in claim 18.

**Patentansprüche**

1. Verfahren zum Betrieb einer Entladungslampe mit mindestens einem ersten Modus, in welchem die Lampe im Wesentlichen bei ihrer Nennleistung betrieben wird, und wobei zumindest der Farbwiedergabeindex oder die Struktur des Spektrums des emittierten Lichts durch Variieren von zumindest der Amplitude ($I_p$), der Dauer ($\tau_p$) oder der Wiederholrate (f) von, dem Lampenstrom überlagerten Stromimpulsen eingestellt wird, wobei das Verfahren **gekennzeichnet ist durch**:

   einen dritten Modus für eine Konditionierung oder Regeneration der Lampe, wobei der dritte Modus für eine vorgegebene Dauer oder für vorgegebene Zeitintervalle, oder wenn ein hoher Farbwiedergabeindex nicht erforderlich ist, aktiviert wird, wobei in dem dritten Modus zumindest die Amplitude des Lampenstroms oder die Amplitude ($I_p$) oder die Wiederholrate (f) der dem Lampenstrom überlagerten Stromimpulse im Vergleich zu dem ersten Modus so weit reduziert wird, dass ein Niederschlag an den Innenwänden des Lampenkolbens reduziert oder beseitigt wird.

2. Verfahren nach Anspruch 1, wobei während des dritten Modus zumindest die Amplitude oder die Frequenz des Lampenstroms oder die Amplitude ($I_p$), die Dauer ($\tau_p$) oder die Wiederholrate (f) der dem Lampenstrom überlagerten Stromimpulse für die Konditionierung oder Regeneration der Lampe variiert wird.

3. Verfahren nach Anspruch 1, wobei während des dritten Modus zumindest die Amplitude oder die Frequenz des Lampenstroms oder die Amplitude ($I_p$), die Dauer ($\tau_p$) oder die Wiederholrate (f) der dem Lampenstrom überlagerten Stromimpulse so eingestellt wird, dass die Effizienz oder die Brennspannung der Lampe in einem voreingestellten Bereich bleibt.

**4.** Verfahren nach Anspruch 1, wobei während des dritten Modus die Frequenz des Lampenstroms relativ zu der während des ersten Modus vorherrschenden Frequenz erhöht oder reduziert wird, um die Brennspannung der Lampe zu erhöhen oder zu reduzieren.

**5.** Verfahren nach Anspruch 1, wobei zumindest die Amplitude ($I_p$), die Dauer ($\tau_p$) oder die Wiederholrate (f) von Stromimpulsen so eingestellt wird, dass eine Änderung von zumindest dem Farbwiedergabeindex oder der Struktur des Spektrums im Wesentlichen durch eine Variation der Temperatur des Plasmakanals und die Absorptionsvorgänge in dem Entladungsgas der Lampe vorgenommen wird.

**6.** Verfahren nach Anspruch 1 mit einem zweiten Modus, wobei zumindest ein Teil des von der Lampe während der Phasen ohne Stromimpulse emittierten Lichts ausgefiltert wird.

**7.** Verfahren nach Anspruch 1, wobei der Lampenstrom im Wesentlichen ein Rechteckwechselstrom ist.

**8.** Verfahren nach Anspruch 7, wobei die Stromimpulse die gleiche Polarität wie die Halbperiode, der sie überlagert sind, aufweisen, und wobei der Lampenstrom die Polarität nach einem Stromimpuls ändert.

**9.** Verfahren nach Anspruch 1, wobei das Verhältnis zwischen der Leistung $P_p$ während der Stromimpulse und der gesamten Lampenleistung $P_{La}$ zwischen etwa 0,4 und 0,95 liegt.

**10.** Verfahren nach Anspruch 1, wobei das Impulstastverhältnis ($2 f \tau_p / T$) der Stromimpulse zwischen etwa 5 und 50% liegt.

**11.** Verfahren nach Anspruch 1, wobei die Stromimpulse eine Amplitude in einem Bereich zwischen etwa 5 und 50 A bei einer Lampenstromamplitude in dem Bereich zwischen etwa 0,3 und 1 A aufweisen.

**12.** Verfahren nach Anspruch 1, wobei die Stromimpulse eine Wiederholrate f zwischen etwa 50 Hz und 10 kHz aufweisen.

**13.** Verfahren nach Anspruch 6, wobei der Filtervorgang mit Hilfe eines Zeitfilters erreicht wird, welches lediglich das von der Lampe während der Stromimpulse emittierte Licht durchlässt.

**14.** Verfahren nach Anspruch 1, wobei das von der Lampe emittierte Licht von einem Spektralfilter gefiltert wird, um eine gewünschte Struktur des Strahlungsspektrums zu erhalten.

**15.** Schaltungsanordnung mit einer Steuereinheit (20) zum Betrieb einer Entladungslampe, die so eingerichtet ist, dass sie das Verfahren nach einem der Ansprüche 1 bis 15 ausführt.

**16.** Schaltungsanordnung nach Anspruch 15 in Kombination mit einer Entladungslampe und einem Zeit- und/oder Spektralfilter für das von der Lampe emittierte Licht.

**17.** Lichtleitfaseranordnung mit einer Entladungslampe und einer Schaltungsanordnung nach Anspruch 15.

**18.** Beleuchtungseinheit mit einer Quecksilberhochdruckentladungslampe und einer Schaltungsanordnung nach Anspruch 15.

**19.** Projektionssystem mit einer Projektionsanzeige und einer Beleuchtungseinheit nach Anspruch 18.

**20.** Endoskop mit einer Beleuchtungseinheit nach Anspruch 18.

**Revendications**

**1.** Procédé pour faire fonctionner d'une lampe à décharge, avec au moins un premier mode dans lequel la lampe est exploitée essentiellement à sa puissance nominale et dans lequel au moins un de l'indice de rendu des couleurs et de la configuration du spectre de la lumière émise est ajustés par la variation de l'amplitude ($I_p$), de la durée ($\tau_p$) et du taux de répétition (f) d'impulsions de courant étant superposées sur le courant de lampe, le procédé étant **caractérisé en ce que** :

un troisième mode pour un conditionnement ou une régénération de la lampe, le troisième mode étant activé pendant une durée prédéterminée ou pendant des intervalles de temps prédéterminés ou lorsqu'un indice de rendus des couleurs élevé n'est pas requis, troisième mode dans lequel

au moins un de l'amplitude du courant de lampe et de l'amplitude ($I_p$) et du taux de répétition ($f$) des impulsions de courant qui sont superposées sur le courant de lampe est tellement réduit par rapport au premier mode que n'importe quel dépôt sur les parois intérieures de l'ampoule de lampe est réduit ou enlevé.

2. Procédé selon la revendication 1, dans lequel on fait varier, pendant le troisième mode, au moins un de l'amplitude et de la fréquence du courant de lampe et de l'amplitude ($I_p$), de la durée ($\tau_p$) et du taux de répétition ($f$) des impulsions de courant étant superposées sur le courant de lampe pour le conditionnement ou la régénération de la lampe.

3. Procédé selon la revendication 1, dans lequel, pendant le troisième mode, au moins un de l'amplitude et de la fréquence du courant de lampe et de l'amplitude ($I_p$), de la durée ($\tau_p$) et du taux de répétition ($f$) des impulsions de courant étant superposées sur le courant de lampe est ajusté de telle façon que le flux lumineux ou la tension d'allumage de la lampe reste dans une gamme préréglée.

4. Procédé selon la revendication 1, dans lequel, pendant le troisième mode, la fréquence du courant de lampe est augmentée ou est réduite par rapport à la fréquence régnant pendant le premier mode afin d'augmenter ou de réduire la tension d'allumage de la lampe.

5. Procédé selon la revendication 1, dans lequel au moins un de l'amplitude ($I_p$), de la durée ($\tau_p$) et du taux de répétition ($f$) des impulsions de courant est ajusté tellement qu'un changement d'au moins un de l'indice de rendu des couleurs et de la configuration du spectre est effectué essentiellement par une variation de la température du canal de plasma et des processus d'absorption dans le gaz de décharge de la lampe.

6. Procédé selon la revendication 1, avec un deuxième mode dans lequel au moins une partie de la lumière qui est émise par la lampe pendant les phases sans impulsions de courant est enlevée par filtrage.

7. Procédé selon la revendication 1, dans lequel le courant de lampe est un courant alternatif sensiblement carré.

8. Procédé selon la revendication 7, dans lequel les impulsions de courant présentent la même polarité que le demi-cycle sur lequel elles sont superposées et dans lequel le courant de lampe change de polarité après une impulsion de courant.

9. Procédé selon la revendication 1, dans lequel le rapport entre la puissance $P_p$ pendant les impulsions de courant et la puissance de lampe totale $P_{La}$ se situe dans une gamme comprise entre approximativement 0,4 et 0,95.

10. Procédé selon la revendication 1, dans lequel le facteur d'utilisation d'impulsions ($2\,f\,\tau_p\,/\,T$) des impulsions de courant se situe dans une gamme comprise entre approximativement 5 et 50%.

11. Procédé selon la revendication 1, dans lequel les impulsions de courant présentent une amplitude qui se situe dans une gamme comprise entre approximativement 5 et 50 A à une amplitude de courant de lampe qui se situe dans une gamme comprise entre approximativement 0,3 et 1 A.

12. Procédé selon la revendication 1, dans lequel les impulsions de courant présentent un taux de répétition $f$ qui se situe dans une gamme comprise entre approximativement 50 Hz et 10 kHz.

13. Procédé selon la revendication 6, dans lequel le processus de filtrage est obtenu par le biais d'un filtre de temps qui passe seulement la lumière étant émise par la lampe pendant les impulsions de courant.

14. Procédé selon la revendication 1, dans lequel la lumière qui est émise par la lampe est filtrée par un filtre spectral de manière à obtenir une configuration souhaitée du spectre de rayonnement.

15. Montage de circuit avec une unité de commande (20) pour le fonctionnement d'une lampe à décharge qui est adaptée de manière à mettre en oeuvre le procédé selon l'une quelconque des revendications précédentes 1 à 15.

16. Montage de circuit selon la revendication 15, en combinaison avec une lampe à décharge et un filtre de temps et/ou spectral pour la lumière qui est émise par la lampe.

**17.** Montage de fibre optique avec une lampe à décharge et un montage de circuit selon la revendication 15.

**18.** Unité d'éclairage avec une lampe à décharge à vapeur de mercure à haute pression et un montage de circuit selon la revendication 15.

**19.** Système de projection avec un dispositif d'affichage de projection et une unité d'éclairage selon la revendication 18.

**20.** Endoscope avec une unité d'éclairage selon la revendication 18.

FIG. 1

FIG. 2

FIG. 3

FIG. 4

FIG. 5

FIG. 6

FIG. 7

FIG. 8

FIG. 10

FIG. 9

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6441564 B
- US PS6489731 B
- US PS6215252 B
- GB 1575834 A
- US PS4137484 A